# EUROPEAN PATENT APPLICATION

(11) **EP 3 203 813 A1**
(43) Date of publication of application: **09.08.2017**
(21) Application number: 17151792.3
(22) Date of filing: 17.01.2017
(51) Int. Cl.: H05B 37/02, F24F 11/00

(54) **CAMERA-AIDED CONTROLLER OF ILLUMINATION**

(30) Priority: 03.02.2016 US 201615014947
(71) Applicant: Honeywell International Inc., Morris Plains, NJ 07950 (US)
(72) Inventor: VACHA, Pavel, Morris Plains, NJ 07950 (US); SCHINDLER, Zdenek, Morris Plains, NJ 07950 (US); LIBAL, Vit, Morris Plains, NJ 07950 (US); MARIK, Karel, Morris Plains, NJ 07950 (US)
(74) Representative: Houghton, Mark Phillip

(57) **Abstract**

A system incorporating a camera sensor situated in a room having walls with windows and sun blinds. The sun blinds may control outdoor light to the room. Indoor light sources may provide artificial light in the room. A controller may receive signals from the camera sensor. The controller may estimate a presence of occupants and provide control signals to the sun blinds and light sources. A room temperature sensor and an HVAC system may be connected to the controller. A preset temperature, which may depend on occupancy, in the room or zone may be achieved with various kinds of heating or cooling. At the same time, outdoor light and indoor artificial light may be controlled to obtain a preset intensity of lighting in the room, which may depend on occupancy, in a manner to achieve a minimum cost of energy used by the HVAC and the light sources.

## Description

### Background

The present disclosure pertains to lighting and particularly to controlled lighting of spaces.

### Summary

The disclosure reveals a system and approach incorporating a camera sensor situated in a room having walls with windows and sun blinds. The sun blinds may control outdoor light entering the room and indoor light sources may provide artificial light in the room. A controller may receive input signals from the camera sensor, which detects light intensity and presence of occupants in the room. A central point of the disclosure is presence detection by the camera. When somebody is detected in a zone of interest then the following actions may be triggered, such as glare prevention, sufficient light level, and so on. If no one is present, then there appears to be no need to care about user comfort and the place may be controlled according to default settings of heating and/or cooling devices such as a heating, ventilation and air conditioning (HVAC) system to minimize costs. This approach may apply to various aspects of the present system.

The controller may provide control signals to the sun blinds and light sources. A temperature sensor in the room and an HVAC may be connected to the controller. A preset temperature in the room or zone may be achieved with an HVAC or another device that provide heating or cooling in the room in combination with heat from outdoor light and indoor light sources. At the same time light from outdoor and indoor sources is controlled to obtain the desired intensity of lighting in the room in a manner to achieve a minimum cost of energy used by the HVAC or other device and the light sources. The preset temperature may be set by facility managers or by occupants and the detected occupancy is taken into account. Moreover, occupancy may be used by the HVAC to estimate heat gains from human bodies. The HVAC may also provide hot water to radiators of a hydronic heating system, not only through hot air, when heating is active.

### Brief Description of the Drawing

Figure 1 is a diagram of components and information flows among them for controlled room lighting;
Figure 2 is a diagram of an office space shown as an example of camera-aided control of lighting; and
Figure 3 is a diagram of an integration of portions of the diagrams in Figures 1 and 2.

### Description

The present system and approach may incorporate one or more processors, computers, controllers, user interfaces, wireless and/or wire connections, and/or the like, in an implementation described and/or shown herein.

This description may provide one or more illustrative and specific examples or ways of implementing the present system and approach. There may be numerous other examples or ways of implementing the system and approach.

Nowadays, administrative and other buildings may be equipped with inside or outside blinds to shield working spaces from direct sunlight. The blinds may be either manually operated (mechanically or using a remote controlled engine) or automatically controlled with a manual override. Some automated blinds control solutions may use simple presence passive infrared (PIR) motion detectors and local light intensity sensors. The PIR motion detectors may be poor for presence detection if the occupants do not perform significant moves and provide no information about the location of the occupants. The light intensity sensors may be limited to a constrained field of view, represent the light intensity by a single value, and often confused by lighting environment disturbances (reflections, light beams from the outside, and so on). Also, blinds control solutions do not necessarily account for personal lighting preferences of the building space occupants. These shortcomings may result in an occupants' annoyance due to the undesired movements of the blinds or due to uncomfortable blinds' settings.

Further, the automated building control solutions control lighting, sun blinds and air conditioning, each separately, may use simple fixed rules, and therefore cannot necessarily realize an achievable energy economy or achieve occupants' comfort to its full potential.

A blinds position control may be a multi-objective task. Position control may involve the following objectives: (i) Glare (direct sunlight) protection; (ii) Lighting level control; (iii) Privacy protection; (iv) Personal preference for visual contact with exterior; and (v) Control of heating gains caused by sun.

The present approach may use a camera to achieve the objectives. Further, using the camera as a sensor for occupancy, occupants' location and for lighting level estimate may allow one to address the objectives in a zone (e.g., to distinguish the working place from the passage in an open space office) or in multiple zones (e.g., to control lighting at multiple working spaces in an open space office separately).

Technical features of camera sensors and computer vision algorithms may allow a computer to locate/track persons in a space monitored by one or more cameras. For instance, one or multiple ceiling mounted cameras may cover a whole room, office, floor space, and so forth.

Computer vision algorithms applied to real-time video data from cameras may return real-time information about instantaneous occupancy of a monitored space including occupant location information so that occupancy of a specified spatial zone can be determined with a high reliability. With advances of smart cameras, some of the processing may be done directly in the camera. An extreme case is that the camera sensor would not necessarily produce any video; it may directly report a presence of occupants and a light level in the specified zones of interest (e.g., a user desk).

Further, the data collected from the cameras may be used to estimate an instantaneous lighting level (ambient light intensity or surface illumination) at a specific space location so that a lighting level in a specified spatial zone can be determined with high reliability.

An integrated room control system based on single or multiple cameras and an algorithm may have the following features. 1) It may use spatial definition of a single occupancy zone or multiple occupancy zones within a field of view of a camera or within an aggregated field of view of multiple cameras. 2) The system may use a camera sensor to detect a presence and location of occupants in predefined zones. 3) The system may use a camera sensor to estimate a lighting level in the predefined zones. 4) The system may use a camera sensor to detect sunlight, glare and sunlight direction occurring in the predefined zone or zones. 5) It may use indoor and outdoor temperature sensors to determine the instantaneous outdoor temperature and the indoor temperature in the predefined zone or zones. 6) The system may adjust the sun blinds so that the glare is prevented in zones that are occupied. 7) The system may adjust the sun blinds according to a zone occupant's light intensity preferences for zone or zones that are occupied.

The functionality of feature 7) may be coordinated with the lighting control, which adjusts the indoor lighting intensity towards the same objectives (according to the same occupant's lighting preferences). Further, the zone occupant's light intensity preferences may be balanced with lighting energy savings requirements. For example, for each zone, a combination of indoor illumination and outdoor illumination received through suitably positioned sun blinds may be selected in such way that lighting preferences like predefined intensity, glare prevention, etc. are achieved and total costs of energy for lighting is minimized. Further, the zone occupant's light intensity preferences may be balanced with lighting and HVAC energy savings requirements if the sun blinds' control is integrated also with the HVAC control. For example, for each zone, a combination of indoor illumination and outdoor illumination received through a suitably positioned sun blinds may be selected in such way so that a specified light intensity (with regard to occupancy) is achieved and a total cost of energy for lighting and for an HVAC is minimized.

An example, without the HVAC involved, may be considered. Sun blinds may be first positioned so that all light-related requirements are fulfilled. Then, if there is not enough illumination in the workspace, artificial light may be switched on with appropriate intensity.
8) The system may constrain the sun blinds' moves and lighting control changes so that the occupant's comfort is maintained. For example, smart delays in sun blinds control and in lighting control may be introduced so that a frequency of fast repositioning of sun blinds or sun blind moves is lower than a predefined value and that a frequency of lights switching is lower than a predefined value. The speed of repositioning may be limited too. Or, a speed of change of indoor lighting may be limited in case of their continuously controlled intensity.
9) The system may adjust the sun blinds according to unoccupied zone presets in the zones that are generally not occupied. The functionality of such adjustment may be coordinated with the lighting control and HVAC control analogically with the description of feature 7). Unoccupied zone presets may incorporate a default setting, e.g., "closed" blinds and lighting off, or they may incorporate a dynamically calculated state, e.g., according to lighting and HVAC energy savings strategy if the sun blinds control is integrated with the lighting control and with an HVAC control analogically with the description of feature 7). The zones may be defined and represented in an appropriate form readable by and understandable to the occupancy detection algorithm.

A room may have to be equipped with an integrated controller of lights, sun blinds and an HVAC, and camera sensors with capabilities described herein. A single zone or multiple non-overlapping zones may be monitored by a single camera or multiple camera sensors. Zones may overlap, if the software takes overlapping into account.

Each zone may be associated with lights that illuminate it. Each zone may also be associated with sun blind segments that influence an outdoor lighting within the zone. A zone to sun blind segment association may be dynamically inferred, e.g., be based on detected outdoor lighting or using knowledge of date/time, geo-location and zone-to-window relative location.

An integrated controller may evaluate virtually all relevant signals from sensors, including outputs from a camera sensor or sensors, and may issue control signals over control connections to the sun blinds, lighting and HVAC as described herein. Any time, controls of sun blinds may be overwritten by prioritized safety provisions, e.g., if strong winds threaten external sun blinds.

Blinds may be an electronic light switch or light valve, such as an LCD or another kind of electronically controlled transmissive device. The device may be a special kind of voltage controlled coloring glass as a blind.

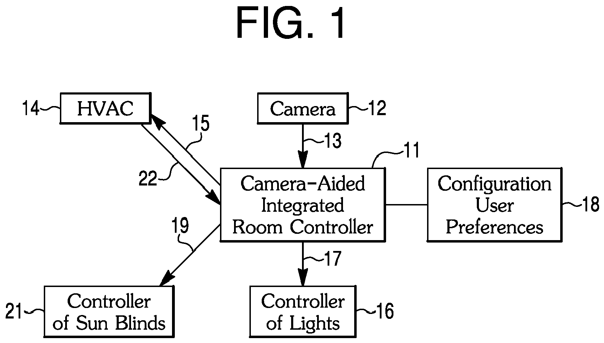

Figure 1 is a diagram of components and information flows among them. A camera-added integrated room controller 11 may receive video signals from camera 12 along line 13. Room controller 11, operating for a room or space, may incorporate configuration preferences 18. A heating, ventilation and air conditioning (HVAC) system 14 may receive occupancy information along line 15 from room controller 11. HVAC system 14 may provide information, such as setpoints, indoor temperature and outdoor temperature, along a line 22 to room controller 11. Room controller 11 may provide signals indicating light intensity for each illuminaire to a controller 16 of lights, along a line 17. Room controller 11 may provide signals indicating position and angle for each sun blind along a line 19 to a controller 21.

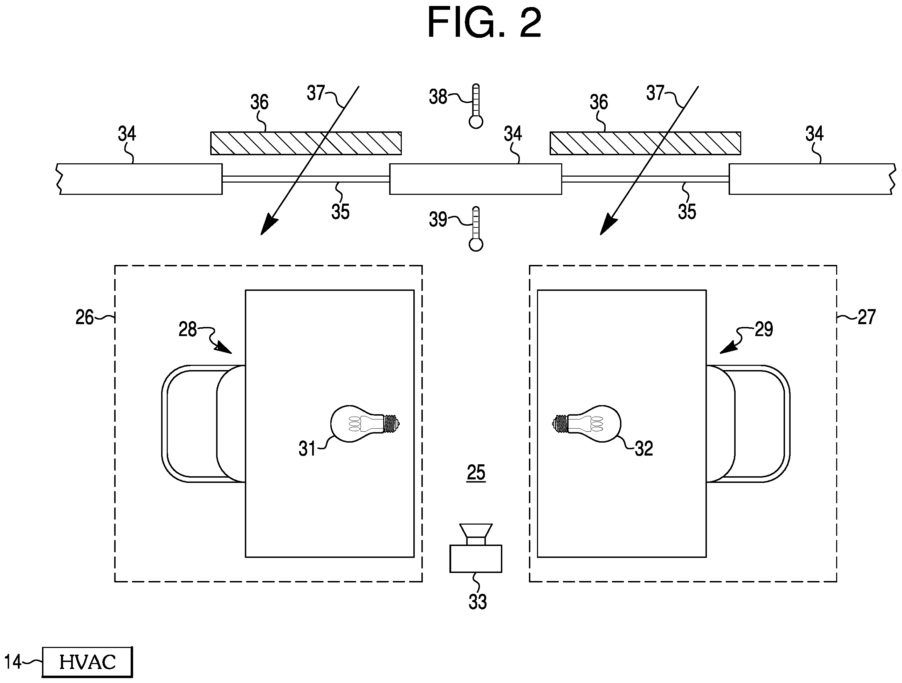

Figure 2 is a diagram of an office space 25 shown as an example of camera-aided control of space 25. A zone 26 and zone 27 may be a part of space 25. Office furniture 28 and furniture 29 may be situated in zones 26 and 27, respectively. There may be lights 31 and 32 in zones 26 and 27, respectively. Lights 31 and 32 may be any kind of lighting. Camera or camera sensor 33 may be situated in space 25. Space 25 may be in a building having walls 34 and windows 35. Shutters 36 may be adjusted to control sunlight 37 entering via windows 35 to space 25. Thermometers or temperature sensors 38 and 39 may provide outside and inside temperatures, respectfully.

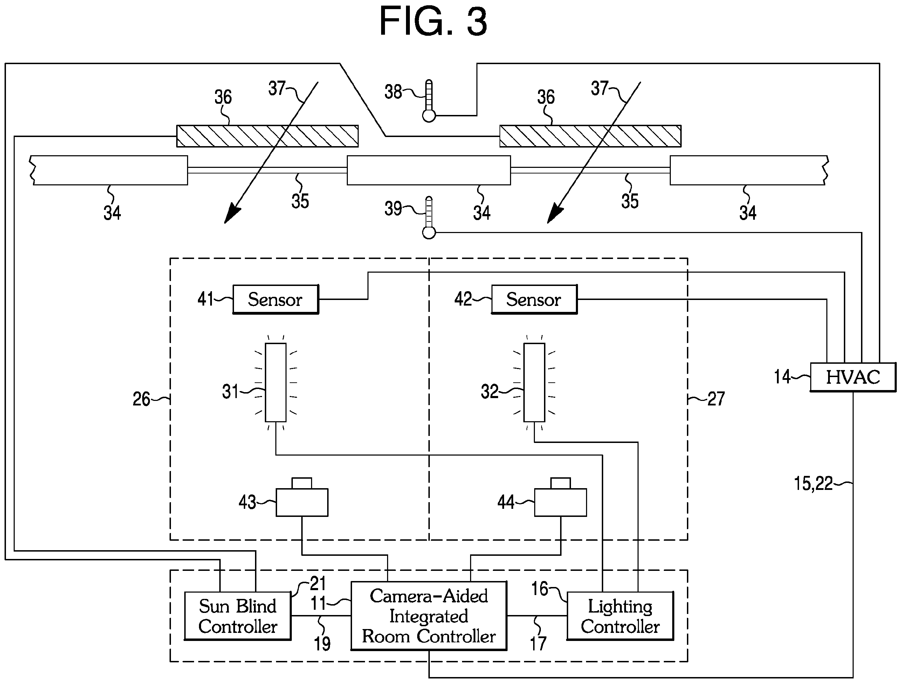

Figure 3 is a diagram of an integration of portions of the diagrams in Figures 1 and 2. Connections of sun blind controller 21 to sun blinds 36 are revealed. Lighting components 31 and 32 of zones 26 and 27, respectively, are shown to be connected to lighting controller 16. Outside temperature sensor 38 and inside temperature sensor 39 have connections to HVAC system 14. Sensors 41 and 42 of zones 26 and 27, respectively, may be connected to HVAC system 14. Sensors 41 and 42 may be temperature sensors. Cameras or camera sensors 43 and 44 of zones 26 and 27, respectively, may be connected to room controller 11.

To recap, a lighting control system may incorporate one or more sun blinds situated over one or more windows of a room, a camera sensor with a field of view covering the room, and a controller connected to the camera sensor and the one or more sun blinds. The camera sensor may detect light in the room and sends a signal representing the light intensity in the room to the controller. The controller may process the light intensity signal to estimate presence of occupants in the room and to determine whether an intensity of outdoor illumination should be increased, decreased or left the same. If the controller determines that the intensity of the outdoor illumination should be increased or decreased, then the controller may send a sun blind signal to cause the one or more sun blinds to open or close, respectively.

The system may further incorporate one or more r light sources having an intensity control input connected to the controller. The controller may process the light intensity signal to determine whether an intensity of indoor light should be increased, decreased or left the same. If the controller determines that the intensity of the indoor light should be increased or decreased, then the controller may send a signal to the intensity control input of the one or more indoor light sources to increase or decrease the intensity of the indoor light, respectively.

Whether the intensity of the outdoor light should be changed and the intensity of indoor light should be changed may be determined from an intensity signal from the camera sensor and a program containing occupant configuration preferences used by the controller.

A sun blind may be a variable transmissive light mechanism that passes light of an intensity as indicated by the sun blind signal.

The intensity of the indoor lighting in the room may be increased or decreased according to a signal to the intensity control input of the one or more indoor light sources.

The system may further incorporate an HVAC system connected to a temperature sensor in the room and to the controller. The controller may determine, according to a program containing occupant configuration preferences or settings, what the intensity of the outdoor light, the intensity of indoor light and the temperature should be to minimize costs of energy used in view of occupant configuration preferences or settings.

The occupant configuration preferences or settings may incorporate one or more items selected from a group having light intensities, glare levels, lighting levels, heating gains caused by outside light, occupancy, occupants' locations, comfort levels, controls of zones, spatial definition of one or more occupancy zones, sunlight direction, indoor temperatures, outdoor temperature, energy savings, prices of different kinds of energy, frequency and speed of changing sun blinds, frequency and speed of light changes, unoccupied presets, one or more settings of one or more cameras or camera sensors, and settings of an HVAC.

An approach for controlling light intensity in a space may incorporate detecting a presence of a person or occupant in a zone of interest of a space monitored by a camera sensor, detecting an intensity of light with a camera sensor in the space having one or more windows that can with adjustable one or more sun blinds allow more or less light into the space monitored by a camera sensor, converting the intensity of the light into an intensity signal, and adjusting the one or more sun blinds to increase or reduce an amount of light passing through the one or more windows according to a detected preset occupancy and the magnitude of the intensity signal to achieve a preset level of intensity of light in the space.

The approach may further incorporate adjusting one or more indoor light sources in the space with a source signal in combination with the adjusting the one or more sun blinds according to the magnitude of the intensity signal to obtain the preset level of intensity of light in the space.

The approach may further incorporate adjusting a temperature with an HVAC in the space to a preset level of temperature in combination with the adjusting the one or more sun blinds according to the magnitude of the intensity signal and adjusting the one or more indoor light sources with a source signal to obtain the preset level of intensity of light in the space in a manner to achieve a minimum cost of energy used by the HVAC and the one or more indoor light sources.

If one or more occupants are detected in the space, then the preset level of temperature and the preset level of intensity of light may be set to values that result in comfortable conditions for the one or more occupants in the manner to achieve a minimum cost of energy used by the HVAC and the one or more indoor light sources. The comfortable conditions may incorporate a temperature in the space between 65 and 80 degrees Fahrenheit. If there is a lack of detection of one or more occupants in the space, then the preset level of temperature and the preset level of intensity of light may be set to values in a manner to achieve a minimum cost of energy used by the HVAC and the one or more indoor light sources without damage to the space or to any components in the space.

An illumination mechanism may incorporate one or more camera sensors situated in a room having walls with one or more windows, one or more sun blinds situated over the one or windows, respectively, one or more indoor sources of light in the room, and a controller having an input connected to the one or more camera sensors, having a first output connected to the one or more sun blinds, and having a second output connected to the one or more indoor sources of light. The one or more camera sensors may detect light in the room. The controller may receive a first signal from the one or more camera sensors indicating an intensity of light in the room, In response to the first signal, the controller may estimate presence of occupants in the room and provide a second signal to the one or more sun blinds letting in an amount of outdoor light through the one or more windows into the room in accordance with the second signal, and the controller may provide a third signal to the one or more indoor sources of light to provide an amount of artificial indoor light in accordance with the third signal, to achieve a preset intensity of light in the room.

The mechanism may further incorporate a temperature sensor in the room connected to the controller, and an HVAC system connected to the controller.

A temperature in the room may be affected by the one or more indoor lighting sources and the one or more sun blinds as controlled by the second and third signals.

A preset temperature in the room may be achieved with an HVAC providing heating or cooling in the room in combination with adjusting the one or more sun blinds according to the second signal, adjusting the one or more indoor lighting sources according to the third signal to obtain the preset intensity of lighting in the room in a manner to achieve a minimum cost of energy used by the HVAC and the one or more indoor lighting sources.

Whether there is a presence of one or more occupants in the space, may be determined according to the camera sensor and the controller.

If one or more occupants are detected in the room, then the preset level of temperature and the preset intensity of light may be set to values that result in comfortable conditions for the one or more occupants in a manner to achieve a minimum of energy used by the HVAC and the one or more indoor lighting sources. The comfortable conditions may incorporate a temperature in the room between 65 and 80 degrees Fahrenheit.

If there is a lack of detection of one or more occupants in the space, then the preset level of temperature and the preset intensity of light may be set to values in a manner to achieve a minimum cost of energy used by the HVAC and the one or more indoor lighting sources without damage to the space or to any components in the space.

An area of the room may incorporate two or more pre-defined overlapping or non-overlapping zones.

For each zone, a combination of temperature, an amount of indoor light and an amount of outdoor light, may be selected so that a preset light intensity and temperature are achieved for each zone with regard to occupancy and that a total cost of energy for lighting and HVAC is minimized.

Any publication or patent document noted herein is hereby incorporated by reference to the same extent as if each individual publication or patent document was specifically and individually indicated to be incorporated by reference.

In the present specification, some of the matter may be of a hypothetical or prophetic nature although stated in another manner or tense.

Although the present system and/or approach has been described with respect to at least one illustrative example, many variations and modifications will become apparent to those skilled in the art upon reading the specification. It is therefore the intention that the appended claims be interpreted as broadly as possible in view of the related art to include all such variations and modifications.

Preferred Embodiments of the Present Invention are as numbered below:
1. A lighting control system comprising:
   one or more sun blinds situated over one or more windows of a room;
   a camera sensor with a field of view covering the room; and
   a controller connected to the camera sensor and the one or more sun blinds; and
   wherein:
   the camera sensor detects light in the room and sends a signal representing the light intensity in the room to the controller;
   the controller processes the light intensity signal to estimate presence of occupants in the room and to determine whether an intensity of outdoor illumination should be increased, decreased or left the same;
   if the controller determines that the intensity of the outdoor illumination should be increased or decreased, then the controller sends a sun blind signal to cause the one or more sun blinds to open or close, respectively.
2. The system of 1, further comprising:
   one or more indoor light sources having an intensity control input connected to the controller; and wherein:
   the controller processes the light intensity signal to determine whether an intensity of indoor light should be increased, decreased or left the same; and
   if the controller determines that the intensity of the indoor light should be increased or decreased, then the controller sends a signal to the intensity control input of the one or more indoor light sources to increase or decrease the intensity of the indoor light, respectively.
3. The system of 2, wherein whether the intensity of the outdoor light should be changed and the intensity of indoor light should be changed is determined from an intensity signal from the camera sensor and a program containing occupant configuration preferences used by the controller.
4. The system of 2, wherein a sun blind is a variable transmissive light mechanism that passes light of an intensity as indicated by the sun blind signal.
5. The system of 2, wherein the intensity of the indoor lighting in the room can be increased or decreased according to a signal to the intensity control input of the one or more indoor light sources.
6. The system of 3, further comprising:
   an HVAC system connected to a temperature sensor in the room and to the controller; and
   wherein the controller determines, according to a program containing occupant configuration preferences or settings, what the intensity of the outdoor light, the intensity of indoor light and the temperature should be to minimize costs of energy used in view of occupant configuration preferences or settings.
7. The system of 6, wherein the occupant configuration preferences or settings incorporate one or more items selected from a group comprising light intensities, glare levels, lighting levels, heating gains caused by outside light, occupancy, occupants' locations, comfort levels, controls of zones, spatial definition of one or more occupancy zones, sunlight direction, indoor temperatures, outdoor temperature, energy savings, prices of different kinds of energy, frequency and speed of changing sun blinds, frequency and speed of light changes, unoccupied presets, one or more settings of one or more cameras or camera sensors, and settings of an HVAC.
8. A method for controlling light intensity in a space comprising:
   detecting a presence of a person or occupant in a zone of interest of a space monitored by a camera sensor;
   detecting an intensity of light with a camera sensor in the space having one or more windows that can with adjustable one or more sun blinds allow more or less light into the space monitored by a camera sensor;
   converting the intensity of the light into an intensity signal; and
   adjusting the one or more sun blinds to increase or reduce an amount of light passing through the one or more windows according to a detected preset occupancy and the magnitude of the intensity signal to achieve a preset level of intensity of light in the space.
9. The method of 8, further comprising adjusting one or more indoor light sources in the space with a source signal in combination with the adjusting the one or more sun blinds according to the magnitude of the intensity signal to obtain the preset level of intensity of light in the space.
10. The method of 9, further comprising adjusting a temperature with an HVAC in the space to a preset level of temperature in combination with the adjusting the one or more sun blinds according to the magnitude of the intensity signal and adjusting the one or more indoor light sources with a source signal to obtain the preset level of intensity of light in the space in a manner to achieve a minimum cost of energy used by the HVAC and the one or more indoor light sources.
11. The method of 10, wherein:
   if one or more occupants are detected in the space, then the preset level of temperature and the preset level of intensity of light are set to values that are comfortable for the one or more occupants in the manner to achieve a minimum cost of energy used by the HVAC and the one or more indoor light sources; and
   if there is a lack of detection of one or more occupants in the space, then the preset level of temperature and the preset level of intensity of light are set to values in a manner to achieve a minimum cost of energy used by the HVAC and the one or more indoor light sources without damage to the space or to any components in the space.
12. An illumination mechanism comprising:
   one or more camera sensors situated in a room having walls with one or more windows;
   one or more sun blinds situated over the one or windows, respectively;
   one or more indoor sources of light in the room; and
   a controller having an input connected to the one or more camera sensors, having a first output connected to the one or more sun blinds, and having a second output connected to the one or more indoor sources of light; and wherein:
   the one or more camera sensors detect light in the room;
   the controller receives a first signal from the one or more camera sensors indicating an intensity of light in the room; and
   in response to the first signal, the controller estimates a presence of occupants in the room and provides a second signal to the one or more sun blinds letting in an amount of outdoor light through the one or more windows into the room in accordance with the second signal, and the controller provides a third signal to the one or more indoor sources of light to provide an amount of artificial indoor light in accordance with the third signal, to achieve a preset intensity of light in the room.
13. The mechanism of 12 further comprising:
   a temperature sensor in the room connected to the controller; and
   an HVAC system connected to the controller.
14. The mechanism of 13, wherein a temperature in the room is affected by the one or more indoor lighting sources and the one or more sun blinds as controlled by the second and third signals.
15. The mechanism of 14, wherein a preset temperature in the room is achieved with an HVAC providing heating or cooling in the room in combination with adjusting the one or more sun blinds according to the second signal, adjusting the one or more indoor lighting sources according to the third signal to obtain the preset intensity of lighting in the room in a manner to achieve a minimum cost of energy used by the HVAC and the one or more indoor lighting sources.
16. The mechanism of 12, wherein whether there is a presence of one or more occupants in the space, is determined according to the camera sensor and the controller.
17. The mechanism of 15, wherein if one or more occupants are detected in the room, then the preset level of temperature and the preset intensity of light are set to values that are comfortable for the one or more occupants in a manner to achieve a minimum of energy used by the HVAC and the one or more indoor lighting sources.
18. The mechanism of 17, wherein if there is a lack of detection of one or more occupants in the space, then the preset level of temperature and the preset intensity of light are set to values in a manner to achieve a minimum cost of energy used by the HVAC and the one or more indoor lighting sources without damage to the space or to any components in the space.
19. The mechanism of 13, wherein an area of the room comprises two or more pre-defined overlapping or non-overlapping zones.
20. The mechanism of 19, wherein for each zone, a combination of temperature, an amount of indoor light and an amount of outdoor light, are selected so that a preset light intensity and temperature are achieved for each zone with regard to occupancy and that a total cost of energy for lighting and HVAC is minimized.

## Claims

1. A lighting control system comprising:
one or more sun blinds situated over one or more windows of a room;
a camera sensor with a field of view covering the room; and
a controller connected to the camera sensor and the one or more sun blinds; and
wherein:
the camera sensor detects light in the room and sends a signal representing the light intensity in the room to the controller;
the controller processes the light intensity signal to estimate presence of occupants in the room and to determine whether an intensity of outdoor illumination should be increased, decreased or left the same;
if the controller determines that the intensity of the outdoor illumination should be increased or decreased, then the controller sends a sun blind signal to cause the one or more sun blinds to open or close, respectively.

2. The system of claim 1, further comprising:
one or more indoor light sources having an intensity control input connected to the controller; and wherein:
the controller processes the light intensity signal to determine whether an intensity of indoor light should be increased, decreased or left the same; and
if the controller determines that the intensity of the indoor light should be increased or decreased, then the controller sends a signal to the intensity control input of the one or more indoor light sources to increase or decrease the intensity of the indoor light, respectively.

3. The system of claim 2, wherein whether the intensity of the outdoor light should be changed and the intensity of indoor light should be changed is determined from an intensity signal from the camera sensor and a program containing occupant configuration preferences used by the controller.

4. The system of claim 2, wherein a sun blind is a variable transmissive light mechanism that passes light of an intensity as indicated by the sun blind signal.

5. The system of claim 2, wherein the intensity of the indoor lighting in the room can be increased or decreased according to a signal to the intensity control input of the one or more indoor light sources.

6. The system of claim 3, further comprising:
an HVAC system connected to a temperature sensor in the room and to the controller; and
wherein:
the controller determines, according to a program containing occupant configuration preferences or settings, what the intensity of the outdoor light, the intensity of indoor light and the temperature should be to minimize costs of energy used in view of occupant configuration preferences or settings; and
the occupant configuration preferences or settings incorporate one or more items selected from a group comprising light intensities, glare levels, lighting levels, heating gains caused by outside light, occupancy, occupants' locations, comfort levels, controls of zones, spatial definition of one or more occupancy zones, sunlight direction, indoor temperatures, outdoor temperature, energy savings, prices of different kinds of energy, frequency and speed of changing sun blinds, frequency and speed of light changes, unoccupied presets, one or more settings of one or more cameras or camera sensors, and settings of an HVAC.

7. A method for controlling light intensity in a space comprising:
detecting a presence of a person or occupant in a zone of interest of a space monitored by a camera sensor;
detecting an intensity of light with a camera sensor in the space having one or more windows that can with adjustable one or more sun blinds allow more or less light into the space monitored by a camera sensor;
converting the intensity of the light into an intensity signal; and
adjusting the one or more sun blinds to increase or reduce an amount of light passing through the one or more windows according to a detected preset occupancy and the magnitude of the intensity signal to achieve a preset level of intensity of light in the space.

8. The method of claim 7, further comprising:
adjusting one or more indoor light sources in the space with a source signal in combination with the adjusting the one or more sun blinds according to the magnitude of the intensity signal to obtain the preset level of intensity of light in the space; and
adjusting a temperature with an HVAC in the space to a preset level of temperature in combination with the adjusting the one or more sun blinds according to the magnitude of the intensity signal and adjusting the one or more indoor light sources with a source signal to obtain the preset level of intensity of light in the space in a manner to achieve a minimum cost of energy used by the HVAC and the one or more indoor light sources.

9. The method of claim 8, wherein:
if one or more occupants are detected in the space, then the preset level of temperature and the preset level of intensity of light are set to values that are comfortable for the one or more occupants in the manner to achieve a minimum cost of energy used by the HVAC and the one or more indoor light sources; and
if there is a lack of detection of one or more occupants in the space, then the preset level of temperature and the preset level of intensity of light are set to values in a manner to achieve a minimum cost of energy used by the HVAC and the one or more indoor light sources without damage to the space or to any components in the space.

10. An illumination mechanism comprising:
one or more camera sensors situated in a room having walls with one or more windows;
one or more sun blinds situated over the one or windows, respectively;
one or more indoor sources of light in the room; and
a controller having an input connected to the one or more camera sensors, having a first output connected to the one or more sun blinds, and having a second output connected to the one or more indoor sources of light; and wherein:
the one or more camera sensors detect light in the room;
the controller receives a first signal from the one or more camera sensors indicating an intensity of light in the room; and
in response to the first signal, the controller estimates a presence of occupants in the room and provides a second signal to the one or more sun blinds letting in an amount of outdoor light through the one or more windows into the room in accordance with the second signal, and the controller provides a third signal to the one or more indoor sources of light to provide an amount of artificial indoor light in accordance with the third signal, to achieve a preset intensity of light in the room.

11. The mechanism of claim 10 further comprising:
a temperature sensor in the room connected to the controller; and
an HVAC system connected to the controller; and
wherein:
a temperature in the room is affected by the one or more indoor lighting sources and the one or more sun blinds as controlled by the second and third signals; and
a preset temperature in the room is achieved with an HVAC providing heating or cooling in the room in combination with adjusting the one or more sun blinds according to the second signal, adjusting the one or more indoor lighting sources according to the third signal to obtain the preset intensity of lighting in the room in a manner to achieve a minimum cost of energy used by the HVAC and the one or more indoor lighting sources.

12. The mechanism of claim 10, wherein whether there is a presence of one or more occupants in the space, is determined according to the camera sensor and the controller.

13. The mechanism of claim 11, wherein if one or more occupants are detected in the room, then the preset level of temperature and the preset intensity of light are set to values that are comfortable for the one or more occupants in a manner to achieve a minimum of energy used by the HVAC and the one or more indoor lighting sources.

14. The mechanism of claim 13, wherein if there is a lack of detection of one or more occupants in the space, then the preset level of temperature and the preset intensity of light are set to values in a manner to achieve a minimum cost of energy used by the HVAC and the one or more indoor lighting sources without damage to the space or to any components in the space.

15. The mechanism of claim 11, wherein:
an area of the room comprises two or more pre-defined overlapping or non-overlapping zones; and
for each zone, a combination of temperature, an amount of indoor light and an amount of outdoor light, are selected so that a preset light intensity and temperature are achieved for each zone with regard to occupancy and that a total cost of energy for lighting and HVAC is minimized.
